# EUROPÄISCHE PATENTSCHRIFT

(11) **EP 2 961 957 B1**
(45) Veröffentlichungstag und Bekanntmachung des Hinweises auf die Patenterteilung: **05.04.2017**
(21) Anmeldenummer: 14705504.0
(22) Anmeldetag: 19.02.2014
(51) Int. Cl.: F02B 29/04

(54) **FRISCHLUFTANLAGE**
AIR INTAKE
MODULE D'ADMISSION D'AIR

(30) Priorität: 26.02.2013 DE 102013203099
(43) Veröffentlichungstag der Anmeldung: 06.01.2016
(73) Patentinhaber: Mahle International GmbH, 70376 Stuttgart (DE)
(72) Erfinder: DRESPLING, Hans-Peter, 89522 Heidenheim (DE)
(74) Vertreter: BRP Renaud & Partner mbB Rechtsanwälte Patentanwälte Steuerberater
(86) Internationale Anmeldenummer: PCT/EP2014/053193
(87) Internationale Veröffentlichungsnummer: WO 2014/131664

(56) Entgegenhaltungen:
- EP-A1- 2 412 950
- EP-A2- 1 329 610
- WO-A1-2008/002263
- WO-A2-2010/140833
- JP-A- H1 038 163

## Beschreibung

Die vorliegende Erfindung betrifft eine Frischluftanlage zur Versorgung von Brennräumen einer aufgeladenen Brennkraftmaschine mit Frischluft, mit den Merkmalen des Oberbegriffs des Anspruchs 1.

Eine Frischluftanlage umfasst üblicherweise einen Frischlufttrakt zum Führen bzw. zum Definieren eines Frischluftpfads. Im Betrieb der Brennkraftmaschine strömt Frischluft entlang des Frischluftpfads durch den Frischlufttrakt zu den Brennräumen der Brennkraftmaschine. Bei einer aufgeladenen Brennkraftmaschine befindet sich in der Frischluftanlage eine Ladeeinrichtung, wie zum Beispiel ein Roots-Gebläse oder ein Verdichter eines Abgasturboladers. Bei ihrer Aufladung, also bei ihrer Kompression oder Verdichtung wird die Frischluft gleichzeitig erhitzt. Um den Massenstrom zu den Brennräumen zu erhöhen, ist es üblich, die aufgeladene Frischluft zu kühlen, wozu Ladeluftkühler zum Einsatz kommen. Ein derartiger Ladeluftkühler ist üblicherweise in einen Kühlkreis eingebunden, so dass Wärme aus der aufgeladenen Frischluft abgeführt werden kann.

Aus der DE 102 10 132 A1 ist eine Frischluftanlage bekannt, bei der zwei Ladeluftkühler im Frischlufttrakt in Reihe angeordnet sind. Die beiden Kühler sind bei dieser bekannten Frischluftanlage in einem gemeinsamen Kühlkreis in Reihe angeordnet.

Aus der GB 2 057 564 A ist ebenfalls eine Frischluftanlage bekannt, die zwei in Reihe angeordnete Kühler aufweist, die jedoch in unterschiedlichen Kühlkreisen angeordnet sind. Hierdurch bilden die beiden Kühler einen Hochtemperaturkühler und einen stromab davon angeordneten Niedertemperaturkühler. Die beiden Kühler können dabei eine Ladeluftkühleinheit bilden.

Aus der DE 26 55 017 C2 ist eine weitere Frischluftanlage bekannt, die im Frischlufttrakt eine Ladeluftkühleinheit aufweist, die einen Hochtemperaturkühler und stromab davon einen Niedertemperaturkühler besitzt. Bei dieser bekannten Frischluftanlage ist die Ladeluftkühleinheit so in den Frischlufttrakt eingebunden, dass sie einen den Frischluftpfad führenden Abschnitt des Frischlufttrakts bildet. Mit anderen Worten, die Ladeluftkühleinheit ist nicht von einer Wandung des Frischlufttrakts umhüllt, also nicht im Inneren des Frischlufttrakts angeordnet, sondern bildet selbst einen Teil der frischluftführenden Wandung des Frischlufttrakts.

Aus der EP 2 412 950 A1 ist eine weitere Frischluftanlage bekannt. Die vorliegende Erfindung beschäftigt sich mit dem Problem, für eine Frischluftanlage der eingangs genannten Art eine verbesserte oder zumindest eine andere Ausführungsform anzugeben, die sich insbesondere durch einen einfachen Aufbau auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, den Hochtemperaturkühler mit Hilfe eines Zwischenflansches mit dem Niedertemperaturkühler fest zu verbinden, wobei der Zwischenflansch jedenfalls eine mechanische und optional eine fluidische Verbindung zwischen den beiden Kühlern bewirkt. Dabei ist der Zwischenflansch als separates Bauteil konzipiert, so dass er bezüglich der beiden Kühler ein separates Bauteil bildet. Im Einzelnen verbindet der Zwischenflansch einen Luftauslass des Hochtemperaturkühlers mechanisch mit einem Lufteinlass des Niedertemperaturkühlers. Die Verwendung eines derartigen Zwischenflansches vereinfacht eine hinreichend luftdichte Verbindung zwischen den beiden Kühlern, da der Zwischenflansch einerseits an den Luftauslass des Hochtemperaturkühlers und andererseits an den Lufteinlass des Niedertemperaturkühlers vergleichsweise einfach anpassbar ist, wodurch die gewünschte fluidische bzw. mechanische Verbindung zwischen den beiden Kühlern besonders einfach realisierbar ist.

Der Zwischenflansch ist bevorzugt einteilig ausgestaltet bzw. aus einem Blechstück geformt. Der Zwischenflansch kann ein Gussteil oder ein Blechformteil sein. Ebenso ist auch ein Schmiedeteil denkbar.

Entsprechend der Erfindung ist der Zwischenflansch als in der Umfangsrichtung vollständig umlaufender bandförmiger Rahmen ausgestaltet, der einen den Luftauslass aufweisenden Auslassendbereich des Hochtemperaturkühlers und einen den Lufteinlass aufweisenden Einlassendbereich des Niedertemperaturkühlers entlang des Frischluftpfads überdeckt. Durch diese Bauweise lässt sich besonders einfach eine hinreichende mechanische Fixierung der beiden Kühler aneinander realisieren. Gleichzeitig vereinfacht sich dadurch auch eine hinreichend luftdichte Verbindung. Darüber hinaus ist der Zwischenflansch aufgrund seiner axialen Überdeckung der beiden Kühler in hohem Maße tolerant gegenüber Maßabweichungen bei der Herstellung der Kühler. Die Axialrichtung verläuft dabei parallel zur Hauptströmungsrichtung der Frischluft im Frischluftpfad.

Bei einer Frischluftanlage können thermische Dehnungseffekte zu Spannungen innerhalb des Frischlufttrakts führen. Die Gefahr thermisch bedingter Spannungen erhöht sich bei einer aufgeladenen Brennkraftmaschine, da dann höhere Temperaturen im Frischlufttrakt erreicht werden. Durch die Integration eines Ladeluftkühlers verschärft sich die Problematik, da am Ladeluftkühler eine intensive Kühlung der Ladeluft realisiert wird. Bei einer gattungsgemäßen Frischluftanlage, die einen Hochtemperaturkühler und einen Niedertemperaturkühler umfasst, ergeben sich ebenfalls signifikante Temperaturunterschiede zum Beispiel am Übergang zwischen den beiden Kühlern, die an dieser Stelle zu einer hohen mechanischen Belastung der beiden Kühler führen können. Entsprechend einer vorteilhaften Ausführungsform kann nun der Zwischenflansch zur Kompensation von thermischen Dehnungseffekten ausgestaltet sein. Somit kann der Zwischenflansch thermisch bedingte Relativbewegungen zwischen den beiden Kühlern ausgleichen. Insbesondere kann sich der Hochtemperaturkühler aufgrund des höheren Temperaturniveaus stärker ausdehnen als der Niedertemperaturkühler, was die Schnittstelle zwischen den beiden Kühlern einer hohen mechanischen Belastung aussetzen kann. Sofern der Zwischenflansch wie vorgeschlagen die thermischen Dehnungseffekte mehr oder weniger kompensieren kann, reduzieren sich die thermisch bedingten Spannungen in dieser Schnittstelle, die weitgehend durch den Zwischenflansch gebildet ist.

Bei der Erfindung weist der Zwischenflansch einen in der Umfangsrichtung umlaufenden Kompensationsbereich zur Kompensation von thermischen Dehnungseffekten auf. Mit anderen Worten, nicht der gesamte Zwischenflansch dient zur Kompensation der thermischen Dehnungseffekten, sondern nur ein speziell dafür vorgesehener Kompensationsbereich innerhalb des Zwischenflansches. Da dieser Kompensationsbereich zweckmäßig in der Umfangsrichtung geschlossen umläuft, lassen sich thermische Dehnungseffekte kompensieren, die in der Axialrichtung, also parallel zur Strömungsrichtung der Frischluft im Frischluftpfad auftreten und die quer dazu entstehen können. Beispielsweise kann sich der Hochtemperaturkühler insgesamt mehr ausdehnen als der Niedertemperaturkühler.

Entsprechend der Erfindung ist besagter Kompensationsbereich zwischen einem fest mit dem Hochtemperaturkühler verbundenen Hochtemperaturbefestigungsbereich des Zwischenflansches und einem fest mit dem Niedertemperaturkühler verbundenen Niedertemperaturbefestigungsbereich des Zwischenflansches angeordnet. Mit anderen Worten, der Kompensationsbereich selbst ist weder mit dem Hochtemperaturkühler noch mit dem Niedertemperaturkühler direkt fest verbunden, sondern jeweils nur indirekt über den jeweiligen Befestigungsbereich. Dementsprechend besitzt der Zwischenflansch in seinem Kompensationsbereich eine elastische Verformbarkeit bzw. Beweglichkeit, die es ermöglicht, dass die beiden daran angrenzenden Befestigungsbereiche des Zwischenflansches den Bewegungen und Formänderungen der damit fest verbundenen Kühler folgen können, ohne dass es dabei innerhalb des Kompensationsbereichs zu plastischen Verformungen kommt.

Gemäß einer anderen vorteilhaften Weiterbildung kann der Kompensationsbereich durch wenigstens eine in der Umfangsrichtung umlaufende, im Zwischenflansch ausgebildete Sicke und/oder durch wenigstens einen in der Umfangsrichtung umlaufenden, am Zwischenflansch ausgebildeten Wulst gebildet sein. Eine an einer vom Frischluftpfad abgewandten Außenseite des Zwischenflansches ausgebildete Sicke bildet an dieser Außenseite eine Vertiefung im Zwischenflansch. Im Unterschied dazu bildet ein an dieser Außenseite ausgebildeter Wulst an dieser Außenseite eine Erhöhung. Sofern der Zwischenflansch aus einem bandförmigen Material hergestellt ist, führt das Einbringen einer Sicke an der einen Seite dazu, dass sich an der davon abgewandten anderen Seite ein entsprechender Wulst ausbildet. Das bedeutet, dass ein Zwischenflansch, der an seiner Außenseite eine Sicke aufweist, an seiner dem Frischluftpfad zugewandten Innenseite einen entsprechenden Wulst aufweist. Analog dazu führt das Anbringen eines Wulstes an der Außenseite des Zwischenflansches zu einer entsprechenden Sicke an der Innenseite des Zwischenflansches.

Die jeweilige Sicke bzw. der jeweilige Wulst führt somit in einem quer zur Umfangsrichtung verlaufenden Querschnittsprofil des Zwischenflansches zu einem nach außen oder nach innen gewölbten Abschnitt, der thermisch bedingte Relativbewegungen zwischen den daran angrenzenden Abschnitten elastisch aufnehmen kann.

Bei einer anderen vorteilhaften Ausführungsform kann der Zwischenflansch zur Kompensation von thermischen Dehnungseffekten randseitige Aussparungen aufweisen, die in der Umfangsrichtung verteilt angeordnet sind. Auch diese Maßnahme führt zu einer erhöhten Elastizität innerhalb des Zwischenflansches, wodurch thermisch bedingte Relativbewegungen zwischen den Kühlern besser kompensiert werden können.

Entsprechend einer vorteilhaften Weiterbildung können an einem dem Hochtemperaturkühler zugewandten axialen Rand des Zwischenflansches mehrere erste Aussparungen in der Umfangsrichtung verteilt angeordnet sein, während an einem dem Niedertemperaturkühler zugewandten axialen Rand des Zwischenflansches mehrere zweite Aussparungen in der Umfangsrichtung verteilt angeordnet sind. Zweckmäßig können nun die ersten Aussparungen und die zweiten Aussparungen so positioniert sein, dass sie sich in der Umfangsrichtung abwechseln. Insbesondere lässt sich dadurch ein mäanderförmiger Verlauf des Zwischenflansches in der Umfangsrichtung realisieren. Diese Formgebung des Zwischenflansches führt insbesondere quer zur Axialrichtung, zu einer besonders hohen Elastizität gegenüber unterschiedlichen Ausdehnungen der beiden Kühler.

Entsprechend einer vorteilhaften Ausführungsform kann der Zwischenflansch so konzipiert sein, dass er neben einer mechanischen Verbindung der beiden Kühler außerdem eine fluidische Verbindung der beiden Kühler bewirkt. Insbesondere kann der Zwischenflansch den Hochtemperaturkühler luftdicht mit dem Niedertemperaturkühler verbinden. In diesem Fall sind keine zusätzlichen Dichtungen erforderlich.

Alternativ dazu, kann der Zwischenflansch auch so konzipiert sein, dass er nur eine mechanische Verbindung der beiden Kühler aneinander bewirkt, während für die Abdichtung separate Maßnahmen erforderlich sind.

Entsprechend einer vorteilhaften Ausführungsform kann zwischen einer den Luftauslass aufweisenden auslassseitigen Stirnseite des Hochtemperaturkühlers und einer den Lufteinlass aufweisenden einlassseitigen Stirnseite des Niedertemperaturkühlers wenigstens eine in der Umfangsrichtung umlaufende Dichtung angeordnet sein. Eine derartige, axial wirkende Dichtung ist tolerant gegenüber radial orientierten Dehnungseffekten der beiden Kühler. Sofern also der Zwischenflansch die beiden Kühler axial aneinander befestigt und dabei radiale Dehnungseffekte zulässt, kann mit Hilfe einer derartigen axial wirkenden Dichtung eine zuverlässige Luftdichtigkeit realisiert werden.

Der Zwischenflansch kann mit dem Hochtemperaturkühler und/oder mit dem Niedertemperaturkühler verlötet oder verschweißt sein. Alternativ dazu kann der Zwischenflansch mit dem Hochtemperaturkühler und/oder mit dem Niedertemperaturkühler vercrimpt sein. Ebenso ist es denkbar, den Zwischenflansch mit dem einen Kühler zu verlöten oder zu verschweißen, was bereits im Rahmen der Herstellung dieses einen Kühlers realisierbar ist, während die Verbindung mit dem anderen Kühler dann durch Vercrimpen erfolgen kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine stark vereinfachte, schaltplanartige Prinzipdarstellung einer Brennkraftmaschine mit einer Frischluftanlage,
- Fig. 2: eine isometrische Ansicht der Frischluftanlage mit einer zwei Kühler aufweisenden Ladeluftkühleinheit,
- Fig. 3-6: jeweils einen stark vereinfachten Längsschnitt der Ladeluftkühleinheit im Bereich eines Zwischenflansches, bei verschiedenen Ausführungsformen (nur Fig.5 und 6),
- Fig. 7: eine Draufsicht auf einen Abschnitt der Ladeluftkühleinheit im Bereich des Zwischenflansches, jedoch bei einer weiteren Ausführungsform.

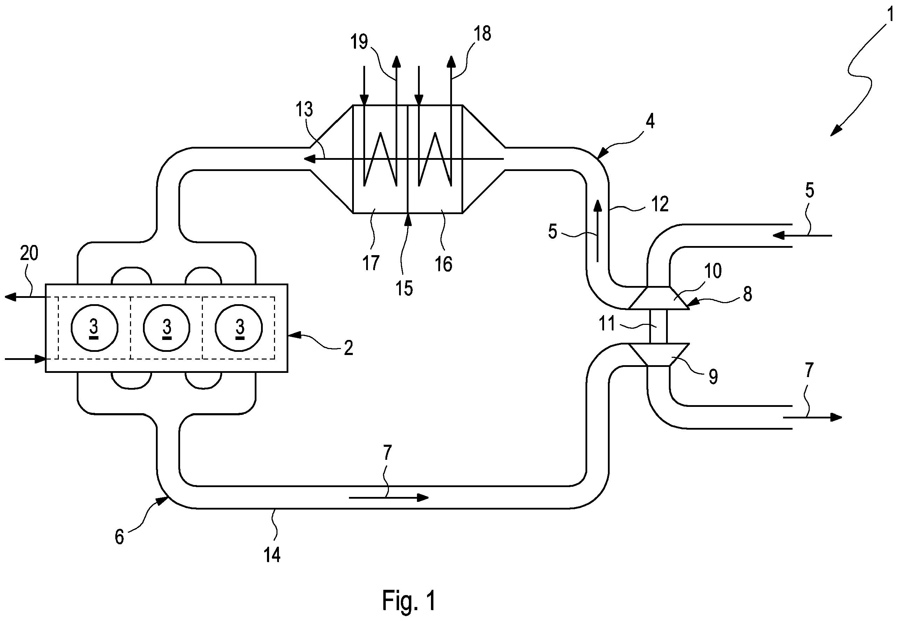

Entsprechend Figur 1 umfasst eine Brennkraftmaschine 1, die vorzugsweise in einem Kraftfahrzeug verwendet wird, einen Motorblock 2, der mehrere Brennräume 3 enthält. Der jeweilige Brennraum 3 wird dabei üblicherweise durch einen Zylinder definiert, in dem ein Kolben hubverstellbar angeordnet ist. Die Brennkraftmaschine 1 umfasst ferner eine Frischluftanlage 4 zum Zuführen von Frischluft zu den Brennräumen 3. Ein entsprechender Frischluftstrom 5 ist durch Pfeile angedeutet. Ferner ist eine Abgasanlage 6 vorgesehen, die zum Abführen von Abgas von den Brennräumen 3 dient. Ein entsprechender Abgasstrom 7 ist durch Pfeile angedeutet. Die Brennkraftmaschine 1 ist als aufgeladene Brennkraftmaschine 1 konzipiert und weist hierzu rein exemplarisch einen Abgasturbolader 8 auf, der in üblicher Weise eine Turbine 9 und einen Verdichter 10 umfasst, die über eine Antriebswelle 11 miteinander antriebsverbunden sind. Im Einzelnen verbindet die Antriebswelle 11 ein hier nicht gezeigtes Turbinenrad der Turbine 9 mit einem nicht gezeigten Verdichterrad des Verdichters 10. Der Verdichter 10 ist in einem Frischlufttrakt 12 der Frischluftanlage 4 angeordnet, der einen Frischluftpfad 13 führt, entlang dem die Frischluft im Betrieb der Brennkraftmaschine 1 strömt. Die Turbine 9 ist dagegen in einem Abgastrakt 14 der Abgasanlage 6 angeordnet, der einen Abgaspfad führt, entlang dem das Abgas während des Betriebs der Brennkraftmaschine 1 strömt.

Die Frischluftanlage 4 ist außerdem mit einer Ladeluftkühleinheit 15 ausgestattet, die axial, also in der Strömungsrichtung der Frischluft entlang des Frischluftpfads 13 in den Frischlufttrakt 12 eingebunden ist. Auf diese Weise bildet die Ladeluftkühleinheit 15 selbst einen den Frischluftpfad 13 führenden Abschnitt des Frischlufttrakts 12. Die Ladeluftkühleinheit 15 umfasst einen Hochtemperaturkühler 16 und einen Niedertemperaturkühler 17, der im Frischluftpfad 13 stromab des Hochtemperaturkühlers 16 angeordnet ist. Der Hochtemperaturkühler 16 ist in einen Hochtemperaturkühlkreis 18 eingebunden. Der Niedertemperaturkühler 17 ist in einen Niedertemperaturkühlkreis 19 eingebunden. Die beiden Kühlkreise 18, 19 können mit einem Motorkühlkreis 20 thermisch gekoppelt sein, der zum Kühlen des Motorblocks 2 dient. Ebenso ist es möglich, dass der Hochtemperaturkühlkreis 18 oder der Niedertemperaturkühlkreis 19 unabhängig vom Motorkühlkreis 20 ist. Ebenso können beide Kühlkreise 18, 19 unabhängig vom Motorkühlkreis 20 sein. Vorzugsweise werden die beiden Kühlkreise 18, 19 auf unterschiedlichen Temperaturniveaus betrieben, um mit einem vergleichsweise hohen energetischen Wirkungsgrad die Kühlung der Ladeluft zu bewirken.

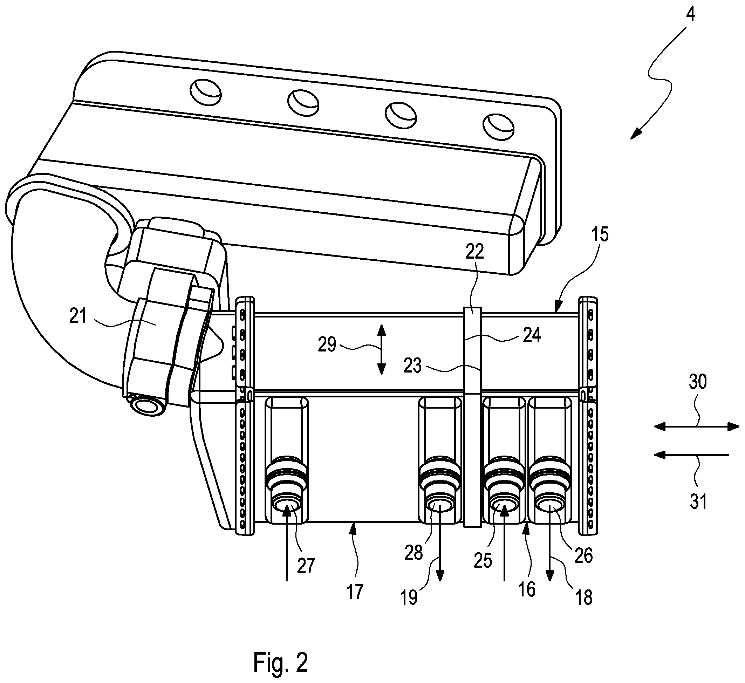

Die Frischluftanlage 4 kann in üblicher Weise weitere Komponenten enthalten, wie zum Beispiel ein Luftfilter oder eine in Figur 2 erkennbare Drosseleinrichtung 21. Die Abgasanlage 6 kann in üblicher Weise zumindest einen Schalldämpfer und zumindest eine Abgasnachbehandlungseinrichtung, wie zum Beispiel einen Katalysator oder ein Partikelfilter, enthalten.

Entsprechend Figur 2 ist zur Verbindung der beiden Kühler 16, 17 ein Zwischenflansch 22 vorgesehen. Der Zwischenflansch 22 bildet bezüglich der beiden Kühler 16, 17 ein separates Bauteil. Der Zwischenflansch 22 ist einerseits mit einem Luftauslass 23 des Hochtemperaturkühlers 16 und andererseits mit einem Lufteinlass 24 des Niedertemperaturkühlers 17 fest verbunden. Der Zwischenflansch 22 schafft somit in erster Linie eine mechanische Verbindung zwischen den beiden Kühlern 16, 17.

Gemäß Figur 2 weist der Hochtemperaturkühler 16 einen Kühlmitteleinlass 25 und einen Kühlmittelauslass 26 auf, um den Hochtemperaturkühler 16 in den Hochtemperaturkühlkreis 18 fluidisch einbinden zu können. Entsprechend dazu besitzt auch der Niedertemperaturkühler 17 einen Kühlmitteleinlass 27 und einen Kühlmittelauslass 28, um den Niedertemperaturkühler 17 in den Niedertemperaturkühlkreis 19 fluidisch einbinden zu können. Bemerkenswert ist nun, dass gemäß der in Figur 2 gezeigten, bevorzugten Ausführungsform die Anschlüsse 25, 26, 27, 28 der beiden Kühler 16, 17 auf derselben Seite der Ladeluftkühleinheit 15 angeordnet sind. Hierdurch vereinfacht sich die Installation.

Der Zwischenflansch 22 ist zweckmäßig als bandförmiger Rahmen ausgestaltet, der in einer in Figur 2 durch einen Doppelpfeil angedeuteten Umfangsrichtung 29 vollständig umläuft. Die Umfangsrichtung 29 rotiert dabei bezüglich einer Axialrichtung 30, die sich parallel zu einer Hauptströmungsrichtung 31 der Frischluft im Frischluftpfad 13 erstreckt.

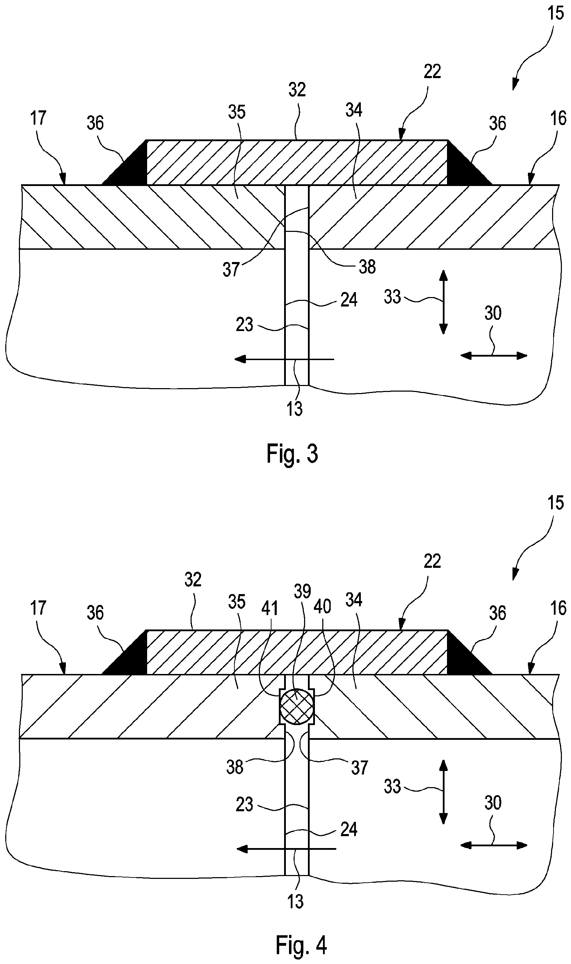

Entsprechend den Figuren 3 bis 7 besitzt der Zwischenflansch 22 quer zur Umfangsrichtung 29 ein flaches Querschnittsprofil 32, das in der Axialrichtung 30 mindestens doppelt so groß ist wie in einer Radialrichtung 33. Zweckmäßig ist das Querschnittsprofil 32 in der Axialrichtung 30 mindestens zehn Mal größer als seine in der Radialrichtung 33 gemessene Wandstärke.

Gemäß den Figuren 3 bis 7 ist der Zwischenflansch 22 außen an den beiden Kühlern 16, 17 so angeordnet, dass er einerseits einen den Luftauslass 23 aufweisenden Auslassendbereich 34 des Hochtemperaturkühlers 16 und andererseits einen den Lufteinlass 24 aufweisenden Einlassendbereich 35 des Niedertemperaturkühlers 17 in der Axialrichtung 30 überlappt. Vorteilhaft ist der Zwischenflansch 22 so konfiguriert, dass er thermische Dehnungseffekte, die an den beiden Kühlern 16, 17 unterschiedlich auftreten, kompensieren kann. In der Regel wird sich der Hochtemperaturkühler 16 im Betrieb der Brennkraftmaschine 1 stärker ausdehnen als der Niedertemperaturkühler 17. Diese Ausdehnung ist dabei sowohl in Axialrichtung 30 als auch in Radialrichtung 33 zu beobachten.

Gemäß den Figuren 3 und 4 kann der Zwischenflansch 22 mittels entsprechender Schweißnähte 36 fest mit den beiden Kühlern 16, 17 verbunden sein. Alternativ dazu sind auch Lötverbindungen sowie Crimpverbindungen denkbar.

Gemäß Figur 4 kann zwischen einer den Luftauslass 23 aufweisenden auslassseitigen Stirnseite 37 des Hochtemperaturkühlers 16 und einer den Lufteinlass 24 aufweisenden einlassseitigen Stirnseite 38 des Niedertemperaturkühlers 17 eine in der Umfangsrichtung 29 umlaufende Dichtung 39 angeordnet sein. Die Dichtung 39 ist dabei zweckmäßig in axial offenen Nuten 40, 41 eingesetzt, die in der auslassseitigen Stirnseite 37 bzw. in der einlassseitigen Stirnseite 38 der beiden Kühler 16, 17 eingearbeitet sind. Die Dichtung 39 arbeitet dabei als Axialdichtung. Abweichend von der vereinfachten Darstellung der Figur 4 ist die Dichtung 39 tolerant gegenüber Radialbewegungen zwischen den beiden Stirnseiten 37, 38 der beiden Kühler 16, 17. Zweckmäßig kann auf eine der beiden Nuten 40, 41 verzichtet werden.

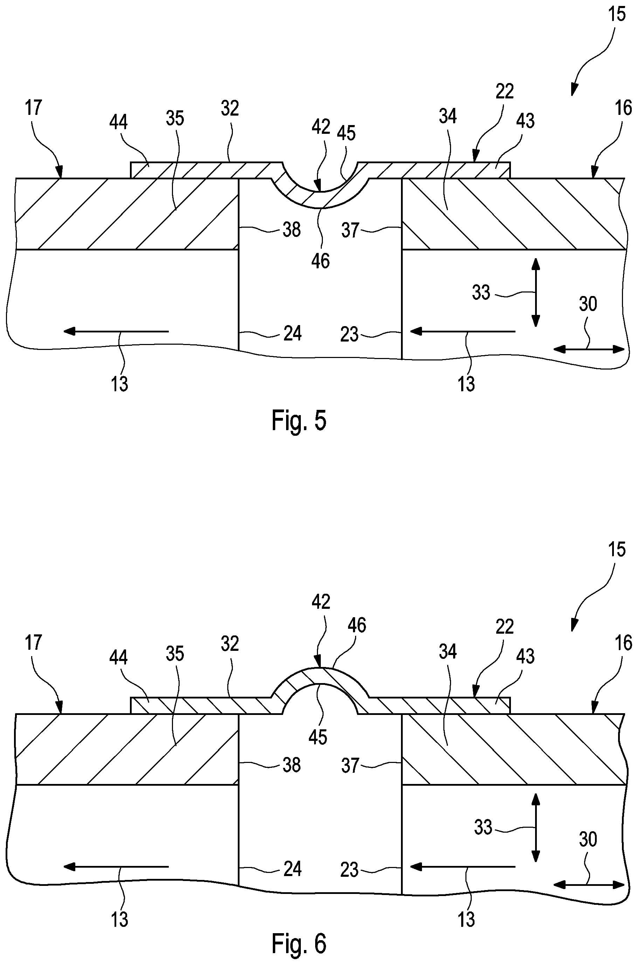

Entsprechend den Figuren 5 und 6 weist der Zwischenflansch 22 einen Kompensationsbereich 42 auf der in der Umfangsrichtung 29 vollständig umläuft und der zur Kompensation von thermischen Dehnungseffekten dient. Zweckmäßig ist dieser Kompensationsbereich 42 dabei zwischen einem fest mit dem Hochtemperaturkühler 16 verbundenen Hochtemperaturbefestigungsbereich 43 des Zwischenflansches 22 und einem fest mit dem Niedertemperaturkühler 17 verbundenen Niedertemperaturbefestigungsbereich 44 des Zwischenflansches 22 angeordnet. Insbesondere erstreckt sich im Querschnittsprofil 32 des Zwischenflansches 22 der Kompensationsbereich 42 im Wesentlichen mittig zwischen den beiden randseitigen Befestigungsbereichen 43, 44. Wie in den Figuren 5 und 6 dargestellt, kann der Kompensationsbereich 42 durch eine umlaufende Sicke 45 bzw. durch einen umlaufenden Wulst 46 gebildet sein. Bei der Verwendung eines bandförmigen Materials zur Herstellung des Zwischenflansches 22 geht das Einprägen einer Sicke 45 an der einen Seite mit dem Ausformen eines Wulstes 46 an der davon abgewandten anderen Seite einher. Dementsprechend zeigt Figur 5 eine Ausführungsform, bei welcher an einer vom Frischluftpfad 13 abgewandten Außenseite eine Sicke 45 eingeprägt ist, die an einer dem Frischluftpfad 13 zugewandten Innenseite zu einem dazu komplementären Wulst 46 führt. Im Unterschied dazu ist in Figur 6 an der Innenseite des Zwischenflansches 22 eine Sicke 45 eingeprägt, die dann an der Außenseite des Zwischenflansches 22 zu dem Wulst 46 führt.

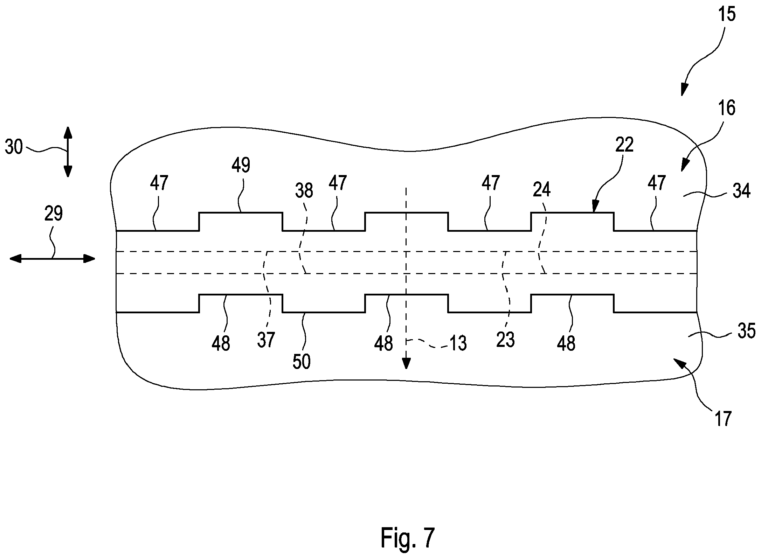

Figur 7 zeigt nun eine andere Ausführungsform des Zwischenflansches 22, wobei der Zwischenflansch 22 auch bei dieser Ausführungsform thermische Dehnungseffekte kompensieren kann. Zu diesem Zweck weist der Zwischenflansch 22 randseitig, also an seinen in der Umfangsrichtung 29 umlaufenden axialen Stirnseiten Aussparungen 47, 48 auf. Diese Aussparungen 47, 48 sind in der Umfangsrichtung 29 verteilt angeordnet. Gemäß der in Figur 7 gezeigten bevorzugten Ausführungsform weist der Zwischenflansch 22 an einem dem Hochtemperaturkühler 16 zugewandten ersten stirnseitigen Rand 49 mehrere erste Aussparungen 47 auf, die in der Umfangsrichtung 29 verteilt angeordnet sind. An einem dem Niedertemperaturkühler 17 zugewandten zweiten Rand 50 weist der Zwischenflansch dagegen mehrere zweite Aussparungen 48 auf, die ebenfalls in der Umfangsrichtung 29 verteilt angeordnet sind. Die Abmessungen und Verteilungen der Aussparungen 47, 48 sind an den beiden Rändern 49, 50 so aufeinander abgestimmt, dass sich in der Umfangsrichtung 29 die ersten Aussparungen 47 und die zweiten Aussparungen 48 abwechseln. Diese Bauweise eignet sich in besonderer Weise zur Kompensation radialer Dehnungseffekte.

Während bei der in Figur 4 gezeigten Ausführungsform und insbesondere auch bei der Ausführungsform der Fig. 7 die Luftdichtigkeit der beiden Kühler 16, 17 im Bereich des Zwischenflansches 22 mit der Dichtung 39 realisiert wird, kann bei anderen Ausführungsformen, insbesondere bei den Ausführungsformen der Figuren 5 und 6, der Zwischenflansch 22 selbst so mit den Kühlern 16, 17 verbunden sein, dass sich der gewünschte luftdichte Abschluss nach außen ergibt. Insbesondere können hierzu umlaufende Schweißnähte 36 wie in den Figuren 3 und 4 dargestellt oder großflächige Lötverbindungen zwischen den zuvor genannten Befestigungsbereichen 43, 44 und den Kühlern 16, 17 realisiert werden.

## Patentansprüche

1. Frischluftanlage zur Versorgung von Brennräumen (3) einer aufgeladenen Brennkraftmaschine (1) mit Frischluft,
- mit einem Frischlufttrakt (12) zum Führen eines Frischluftpfads (13),
- mit einer Ladeluftkühleinhelt (15), die einen Hochtemperaturkühler (16) und einen Niedertemperaturkühler (17) aufweist und die einen den Frischluftpfad (13) führenden Abschnitt des Frischlufttrakts (12) bildet,
**gekennzeichnet durch** einen separaten Zwischenflansch (22), der einen Luftauslass (23) des Hochtemperaturkühlers (16) mit einem Lufteinlass (24) des Niedertemperaturkühlers (17) fest verbindet, wobei der Zwischenflansch (22) als in der Umfangsrichtung (29) vollständig umlaufender, bandförmiger Rahmen ausgestaltet ist, der einen den Luftauslass (23) aufweisenden Auslassendbereich (34) des Hochtemperaturkühlers (16) und einen den Lufteinlass (24) aufweisenden Einlassendbereich (35) des Niedertemperaturkühlers (17) entlang des Frischluftpfads (13) überlappt, wobei der Zwischenflansch (22) einen in der Umfangsrichtung (29) umlaufenden Kompensationsbereich (42) zur Kompensation von thermischen Dehnungseffekten aufweist, und wobei der Kompensationsbereich (42) zwischen einem fest mit dem Hochtemperaturkühler (16) verbundenen Hochtemperaturbefestigungsbereich (43) des Zwischenflansches (22) und einem fest mit dem Niedertemperaturkühler (17) verbundenen Niedertemperaturbefestigungsbereich (44) des Zwischenflansches (22) angeordnet ist.

2. Frischluftanlage nach Anspruch 1,
**dadurch gekennzeichnet,**
**dass** der Zwischenflansch (22) zur Kompensation von thermischen Dehnungseffekten ausgestaltet ist.

3. Frischluftanlage nach Anspruch 1 oder 2,
**dadurch gekennzeichnet,**
**dass** der Kompensationsbereich (42) durch wenigstens eine in der Umfangsrichtung (29) umlaufende, im Zwischenflansch (22) ausgebildete Sicke (45) und/oder durch wenigstens einen In der Umfangsrichtung (29) umlaufenden, am Zwischenflansch (22) ausgebildeten Wulst (46) gebildet Ist.

4. Frischluftanlage nach einem der Ansprüche 1 bis 3,
**dadurch gekennzeichnet,**
**dass** der Zwischenflansch (22) den Hochtemperaturkühler (16) luftdicht mit dem Niedertemperaturkühler (17) verbindet.

5. Frischluftanlage nach einem der Ansprüche 1 bis 4,
**dadurch gekennzeichnet,**
**dass** zwischen einer den Luftauslass (23) aufweisenden auslassseitigen Stirnseite (37) des Hochtemperaturkühlers (16) und einer den Lufteinlass (24) aufweisenden einlassseitigen Stirnseite (38) des Niedertemperaturkühlers (17) wenigstens eine in der Umfangsrichtung (29) umlaufende Dichtung (39) angeordnet ist.

6. Frischluftanlage nach einem der Ansprüche 1 bis 5,
**dadurch gekennzeichnet,**
**dass** der Zwischenflansch (22) mit dem Hochtemperaturkühler (16) und/oder mit dem Niedertemperaturkühler (17) verlötet oder verschweißt ist.

7. Frischluftanlage nach einem der Ansprüche 1 bis 6,
**dadurch gekennzeichnet,**
**dass** der Zwischenflansch (22) mit dem Hochtemperaturkühler (16) und/oder mit dem Niedertemperaturkühler (17) vercrimpt ist.

## Claims

1. Fresh air system for supplying combustion chambers (3) of a supercharged internal combustion engine (1) with fresh air,
- comprising a fresh air tract (12) for conducting a fresh air path (13),
- and having an intercooler unit (15) that comprises a high-temperature cooler (16) and a low-temperature cooler (17) and that forms a portion of the fresh air tract (12) conducting the fresh air path (13),
**characterised in that** a separate intermediate flange (22) firmly connects an air outlet (23) of the high-temperature cooler (16) to an air inlet (24) of the low-temperature cooler (17), wherein the intermediate flange (22) is designed as a strip-shaped structure running fully in the circumferential direction (29), which, along the fresh air path (13), overlaps an outlet region (34) of the high temperature cooler (16), which comprises the air outlet (23), and an inlet region (35) of the low temperature cooler (17), which comprises the air inlet (24), wherein the intermediate flange (22) has a compensation region (42) running all round in the circumferential direction (29) in order to compensate thermal expansion effects, and wherein the compensation region (42) is arranged between a high temperature attachment region (43) of the intermediate flange (22), which is firmly connected to the high temperature cooler (16), and a low temperature attachment region (44) of the intermediate flange (22), which is firmly connected to the low temperature cooler (17).

2. Fresh air system according to claim 1,
**characterised in that**
the intermediate flange (22) is designed in order to compensate thermal expansion effects.

3. Fresh air system according to claim 1 or 2,
**characterised in that**
the compensation region (42) is formed by at least one crease (45) running all round in the circumferential direction (29), formed in the intermediate flange (22), and/or by at least one bulge (46) running all round in the circumferential direction (29), formed in the intermediate flange (22).

4. Fresh air system according to one of claims 1 to 3,
**characterised in that**
the intermediate flange (22) connects the high temperature cooler (16) to the low temperature cooler (17) in an airtight manner.

5. Fresh air system according to one of claims 1 to 4,
**characterised in that**
at least one seal (39) is arranged running all round in the circumferential direction (29), between an end face (37) of the high temperature cooler (16) comprising the air outlet (23) on the air outlet side and an end face (38) of the low temperature cooler (17) comprising the air inlet (24) on the inlet side.

6. Fresh air system according to one of claims 1 to 5,
**characterised in that**
the intermediate flange (22) is soldered or welded to the high temperature cooler (16) and/or to the low temperature cooler (17).

7. Fresh air system according to one of claims 1 to 6,
**characterised in that**
the intermediate flange (22) is crimped to the high temperature cooler (16) and/or to the low temperature cooler (17).

## Revendications

1. Installation d'air frais servant à alimenter en air frais des chambres de combustion (3) d'un moteur à combustion interne (1) chargé,
- avec une tubulure d'air frais (12) servant à guider un chemin d'air frais (13),
- avec une unité de refroidissement d'air de suralimentation (15), qui présente un refroidisseur à température élevée (16) et un refroidisseur à basse température (17) et qui forme un tronçon, guidant le chemin d'air frais (13), de la tubulure d'air frais (12),
**caractérisée par** une bride intermédiaire (22) séparée, qui relie de manière solidaire une sortie d'air (23) du refroidisseur à température élevée (16) à une admission d'air (24) du refroidisseur à basse température (17), dans laquelle la bride intermédiaire (22) est configurée sous la forme d'un cadre s'étendant en totalité dans la direction périphérique (29), présentant une forme de bande, lequel cadre se superpose à une zone d'extrémité de sortie (34), présentant la sortie d'air (23), du refroidisseur à température élevée (16) et une zone d'extrémité d'admission (35), présentant l'admission d'air (24), du refroidisseur à basse température (17) le long du chemin d'air frais (13), dans laquelle la bride intermédiaire (22) présente une zone de compensation (42) s'étendant dans la direction périphérique (29) servant à la compensation d'effets de dilatation thermique, et dans laquelle la zone de compensation (42) est disposée entre une zone de fixation à température élevée (43), reliée de manière solidaire au refroidisseur à température élevée (16), de la bride intermédiaire (22) et une zone de fixation à basse température (44), reliée de manière solidaire au refroidisseur à basse température (17), de la bride intermédiaire (22).

2. Installation d'air frais selon la revendication 1,
**caractérisée en ce**
**que** la bride intermédiaire (22) est configurée aux fins de la compensation d'effets de dilatation thermique.

3. Installation d'air frais selon la revendication 1 ou 2,
**caractérisée en ce**
**que** la zone de compensation (42) est formée par au moins une moulure (45) s'étendant dans la direction périphérique (29), réalisée dans la bride intermédiaire (22) et/ou par au moins un bourrelet (46) s'étendant dans la direction périphérique (29), réalisé au niveau de la bride intermédiaire (22).

4. Installation d'air frais selon l'une quelconque des revendications 1 à 3, **caractérisée en ce**
**que** la bride intermédiaire (22) relie le refroidisseur à température élevée (16) de manière étanche à l'air au refroidisseur à basse température (17).

5. Installation d'air frais selon l'une quelconque des revendications 1 à 4, **caractérisée en ce**
**qu'**au moins un joint d'étanchéité (39) s'étendant dans la direction périphérique (29) est disposé entre un côté frontal situé côté sortie (37), présentant la sortie d'air (23), du refroidisseur à température élevée (16) et un côté frontal situé côté admission (38), présentant l'admission d'air (24), du refroidisseur à basse température (17).

6. Installation d'air frais selon l'une quelconque des revendications 1 à 5,
**caractérisée en ce**
**que** la bride intermédiaire (22) est assemblée par brasage ou par soudage au refroidisseur à température élevée (16) et/ou au refroidisseur à basse température (17).

7. Installation d'air frais selon l'une quelconque des revendications 1 à 6,
**caractérisée en ce**
**que** la bride intermédiaire (22) est assemblée par sertissage au refroidisseur à température élevée (16) et/ou au refroidisseur à basse température (17).
